# EUROPÄISCHE PATENTSCHRIFT

(11) **EP 1 997 602 B1**
(45) Veröffentlichungstag und Bekanntmachung des Hinweises auf die Patenterteilung: **16.05.2012**
(21) Anmeldenummer: 08009453.5
(22) Anmeldetag: 23.05.2008
(51) Int. Cl.: B29C 45/17, B29C 31/00

(54) **Verfahren und Vorrichtung zur Herstellung von Formteilen aus Kunststoff**
Method and device for the manufacture of moulds made of plastic
Procédé et dispositif destinés à la fabrication de pièces de formage en plastique

(30) Priorität: 31.05.2007 DE 102007025519
(43) Veröffentlichungstag der Anmeldung: 03.12.2008
(73) Patentinhaber: IfK Ingenieurbüro für Kunststofftechnik GmbH, 72336 Balingen (DE)
(72) Erfinder: Schmid, Matthias, 72336 Balingen (DE)
(74) Vertreter: Neunert, Peter Andreas

(56) Entgegenhaltungen:
- DE-A1- 10 147 191
- JP-A- 2 165 922
- SPAMER P ET AL: "FLEXIBLES FERTIGUNGSZENTRUM FUER DAS SPRITZGIESSEN KLEINER SERIEN" KUNSTSTOFFE, CARL HANSER VERLAG, MUNCHEN, DE, Bd. 74, Nr. 9, 1. September 1984 (1984-09-01), Seite 489/490, XP001173721 ISSN: 0023-5563
- BENFER W: "WERKZEUGWECHSELSYSTEME AN SPRITZGIESSMASCHINEN" KUNSTSTOFFE, CARL HANSER VERLAG, MUNCHEN, DE, Bd. 77, Nr. 2, 1. Februar 1987 (1987-02-01), Seiten 139-149, XP001173743 ISSN: 0023-5563

## Beschreibung

Die vorliegende Erfindung betrifft ein Verfahren zur Herstellung von Formteilen aus Kunststoff gemäß dem Oberbegriff des Anspruchs 1 sowie eine Vorrichtung zur Herstellung von Formteilen aus Kunststoff gemäß dem Oberbegriff des Anspruchs 6.

Es ist bekannt, zur Herstellung von Formteilen aus Kunststoff vollautomatische Anlagen einzusetzen, die ein Spritzgießwerkzeug und ein entsprechendes Umlaufsystem mit Zuführeinrichtungen und sonstigen Bearbeitungsstationen umfassen. Diese produktspezifischen, vollautomatischen Sonderanlagen erfordern in der Regel aufwändige Zuführeinrichtungen, insbesondere dann, wenn sogenannte Verbundteile hergestellt werden sollen, bei denen bspw. Metallteile mit Kunststoff umspritzt werden. Derartige vollautomatische Anlagen sind relativ teuer und eine Rentabilität ergibt sich in der Regel erst bei Herstellung von hohen Stückzahlen.

In der DE 43 37 490 A1 wird eine Vorrichtung zum Herstellen von Spritzformteilen aus Kunststoff beschrieben, bei der bewegbare Formen über ein Transportsystem zu einer Spritzmaschine transportiert werden, wo das Spritzformteil gespritzt wird. Das Entformen des Spritzteils erfolgt außerhalb des Spritzgießwerkzeuges in einer separaten Station. Anschließend wird die Form in einer weiteren Station für den nächsten Spritzgießvorgang vorbereitet. Auch diese Einrichtung hat wieder den Nachteil, dass das vollautomatische Konzept ein entsprechend aufwändiges Transportsystem benötigt. Das Transportsystem wird noch aufwändiger, wenn als Kunststoffformteile Verbundteile produziert werden sollen, bei denen z.B. Metallteile in eine Kunststoffmatrix eingelagert sind. Dabei erfordert das Bestücken der Form bzw. des Werkstückträgers oder Kassette mit Metallteilen eine entsprechende Logistik mit aufwändigen Zuführeinrichtungen. Aus Kostengründen sind derartige Anlagen für Kleinserien ungeeignet.

Das Problem der mangelhaften Rentabilität taucht insbesondere auch immer dann auf, wenn ein neues Produkt eingeführt werden soll, bei dem die Bedarfszahlen für eine Großserie noch nicht erreicht sind. Selbst wenn neue Produkte ein Potenzial für hohe Stückzahlen aufweisen, so schreckt die Unsicherheit doch viele Produzenten davon ab, hohe Investitionen für eine vollautomatische Anlage zu tätigen. Häufig wird versucht, diese Übergangszeit mit zeit- und personalaufwändigen Kleinstserien zu überbrücken, die einerseits den Nachteil haben, dass sie ebenfalls sehr kostenintensiv sind, und andererseits die für eine Markteinführung notwendigen Stückzahlen nur schwer erreicht werden. Hinzu kommt, dass bei einer Bestückung des Spritzgießwerkzeuges von Hand oder allgemein bei personalabhängigen Arbeitsschritten beim Spritzgießprozess ein konstanter Fertigungszyklus und damit eine konstante Produktqualität häufig nicht mehr gewährleistet werden kann. So leidet beispielsweise die Maßhaltigkeit der Produkte aufgrund unterschiedlicher Erstarrung des Polymermaterials, wenn die Zeitabläufe nicht exakt eingehalten werden und damit konstant sind.

Der Erfindung lag somit das Problem zugrunde, ein Verfahren und eine Vorrichtung bereit zu stellen, Formteile, insbesondere Verbundteile, aus Kunststoff in einer für eine Markteinführung ausreichenden Menge und Qualität und in einer ausreichend kurzen Zeitspanne zu fertigen, ohne dabei auf ein kostenintensives vollautomatisiertes Produktionskonzept zurückgreifen zu müssen.

In der De 101 47 191 A1 wird eine Vorrichtung zur Herstellung von spritzgegossenen, wenigstens ein Einlegeteil enthaltenen Werkstücken beschrieben, wobei die Vorrichtung ein mit Wechselkassetten bestückbares Spritzgießwerkzeug sowie einen Kassettenwechsler umfasst, wobei die Wechselkassette mit dem manuell bestückten Kassettenwechsler in eine Spritzgießposition gebracht wird und anschließend in eine Entlade- und Beladeposition für das Bedienungspersonal. Der Nachteil dieser Anordnung besteht darin, dass Kassettenwechsler und Spritzgießwerkzeuge eine Einheit bilden, was einerseits einen aufwendigen Mechanismus erfordert und andererseits eine spätere Automatisierung erschwert.

Es ist eine weitere Aufgabe der vorliegenden Erfindung, ein Fertigungsmodul als Einstiegslösung für eine Massenfertigung zur Verfügung zu stellen, das ohne großen Änderungsaufwand später in einer vollautomatischen Sonderanlage einsetzbar ist.

Gelöst wird das Problem durch ein Verfahren, das die Merkmale des Anspruchs 1 aufweist. Vorteilhafte Verfahrensvarianten sind durch die Merkmale der Unteransprüche wiedergegeben.

Weiterhin wird das Problem gelöst durch eine Vorrichtung mit den Merkmalen des Anspruchs 7. Vorteilhafte Ausführungsformen sind in den Unteransprüchen 8 bis 12 wiedergegeben.

Das Grundkonzept der vorliegenden Erfindung besteht darin, ein universell einsetzbares Spritzgießwerkzeug, das für eine vollautomatisierte Produktion geeignet ist, mit einem geeigneten Transportsystem und einem entsprechenden Kassettenwechsler zu kombinieren, sodass das Produktionssystem teilautomatisiert abläuft, wobei der produktionsentscheidende Schritt des Spritzgießens analog zu einer späteren vollautomatischen Produktion abläuft, während die Bestückung des Kassettenwechslers bzw. der Wechselkassette manuell vorgenommen wird.

Bei Produktionsstart befindet sich eine vorbereitete Wechselkassette in einer Aufnahmeeinrichtung in einer Be- bzw. Entladeposition im Kassettenwechsler, wobei diese Position so eingerichtet bzw. ausgewählt ist, dass das Be- und Entladen der Wechselkassette gefahrlos vom Bedienungspersonal vorgenommen werden kann. Der Kassettenwechsler transportiert nun die Wechselkassette in eine Entnahmeposition für das Transportsystem.

Dort wird die Wechselkassette mittels des Transportsystems entnommen und im Spritzgießwerkzeug in eine Spritzgießposition gebracht, in der das Formteil gegossen wird. Anschließend wird die Wechselkassette mit aufgespritztem Formteil mittels des Transportsystems dem Spritzgießwerkzeug wieder entnommen und in den Kassettenwechsler zurückgeführt. Die Wechselkassette wird dann von der Aufnahmeposition vom Transportsystem in die Be- und Entladeposition für das Bedienungspersonal gebracht, wo das Formteil herausgenommen und die Wechselkassette wieder für den nächsten Spritzvorgang vorbereitet wird.

Eine weitere Ausgestaltung des erfindungsgemäßen Verfahrens sieht vor, dass die gesamte Wechselkassette der Aufnahmeeinrichtung im Kassettenwechsler entnommen und durch eine bereits vorbereitete Wechselkassette ersetzt wird, die dann den Spritzprozess durchläuft, während die erste Wechselkassette entleert und für den nächsten Verfahrensgang vorbereitet wird.

Für derartige teilautomatisierte Anordnungen kann jede beliebige Spritzgießmaschine eingesetzt werden. Bei einer bevorzugten Ausführungsform werden als Spritzgießmaschinen Vertikalspritzgießmaschinen eingesetzt. Als Transportsystem ist jedes System geeignet, das dem Kassettenwechsler eine Wechselkassette entnehmen, diese in die Spritzgießvorrichtung transportieren und anschließend zurück zum Kassettenwechsler bringen kann. Als einfaches und vorteilhaftes System hat sich ein zur Längsachse des Spritzgießwerkzeuges senkrecht angeordneter linear beweglicher Greiferarm erwiesen, der auf einer Ebene mit der Spritzgießmaschine und dem Kassettenwechsler angeordnet ist und mit einer Linearbewegung sowohl den Kassettenwechsler entladen als auch die Spritzgießmaschine beladen kann.

Eine einfache Ausführungsform für den Kassettenwechsler ist ein drehbarer Rundtisch, der mindestens eine Aufnahmeeinrichtung für eine Wechselkassette aufweist. Bei einer bevorzugten Ausführungsform besitzt der Rundtisch zwei Aufnahmeeinrichtungen, die auf dem Rundtisch um 180° gegeneinander versetzt sind. Durch eine Drehung des Rundtisches um 180° wird die Wechselkassette von der Beladeposition für das Bedienungspersonal in die Entnahmeposition für das Transportsystem gebracht. Gleichzeitig wird die zweite Aufnahmeeinrichtung, die bei der Fertigung in der Regel mit einer Wechselkassette mit bereits aufgespritztem Formteil bestückt ist, in die Ent- und Beladeposition für das Bedienungspersonal gebracht. Während der linear verschiebbare Greiferarm die erste Wechselkassette dem Kassettenwechsler entnimmt und in das Spritzgießwerkzeug transferiert, kann die zweite Wechselkassette vom Bedienungspersonal entleert und für den nächsten Spritzvorgang vorbereitet werden. Auch hier besteht natürlich wieder die Möglichkeit, die Kassette mit aufgespritztem Formteil der Aufnahmeeinheit zu entnehmen und diese mit einer vorbereiteten neuen Wechselkassette zu bestücken. Währenddessen wird das Formteil gespritzt und vom Transportsystem wieder in die Ent- und Beladeposition für das Transportsystem zurück befördert. Eine erneute Drehung des Kassettenwechslers um 180° befördert die frisch bestückte Wechselkassette in die Entnahmeposition für das Transportsystem und die Wechselkassette mit dem aufgespritzten Formteil in die Entnahmeposition für das Bedienungspersonal. Dabei sind die Bewegungen des Transportsystems und des Kassettenwechslers in den Steuerungsablauf der Spritzgießmaschine eingebunden.

Das Herzstück der teilautomatisierten Fertigung ist der manuell bestückbare Kassetten- oder Werkstückträgerwechsler. Wie bereits oben aufgeführt, kann er vorteilhaft als Rundtisch mit zwei Aufnahmepositionen für Wechselkassetten ausgeführt sein, wobei die Aufnahmepositionen um 180° gegeneinander verschoben sind und sich einander auf dem Rundtisch gegenüberliegen. Eine Steigerung des Durchsatzes und eine höhere Konstanz des Prozesses und damit der Produktqualität kann man leicht dadurch erreichen, dass der Rundtisch mit weiteren Aufnahmepositionen für Wechselkassetten bzw. Werkstückträger ausgerüstet wird, sodass im Produktionsablauf getaktet eine Vielzahl von Wechselkassetten im Einsatz sind. Weitere Variationsmöglichkeiten bestehen darin, dass im Bereich des Kassettenwechslers zusätzliche Positionen vorgesehen sind, bei denen Manipulationen oder Bearbeitungsschritte an der Wechselkassette bzw. am gegossenen Formteil vorgenommen werden. Diese Bearbeitungsschritte können manuell oder automatisiert erfolgen. Bei einer vorteilhaften Ausführungsform ist der Kassettenwechsler als Kassettenumlaufsystem ausgeführt, wobei die Ausführungsformen ebenfalls wieder unterschiedlich sein können und das Umlaufsystem wie eine Art Fertigungsband funktioniert.

Das erfindungsgemäße System ist so konzipiert, dass das Spritzgießmodul ohne großen Änderungsaufwand später in einer vollautomatischen Sonderanlage einsetzbar ist. Dabei ist der Werkstückträger- oder Kassettenwechsler so ausgelegt, dass er an verschiedene Fabrikate und Baugrößen von Spritzgießmaschinen, insbesondere Vertikalspritzgießmaschinen, angebaut werden kann. Dieses Konzept hat den Vorteil, dass der Kassetten- oder Werkstückträgerwechsler zeitbegrenzt eingesetzt werden kann, um Einstiegsstückzahlen zu produzieren, und beim Ausbau einer Produktion sukzessive durch höher automatisierte Versionen ersetzt werden kann.

So ist vorgesehen, dass bei langsam ansteigenden Stückzahlen der Bereich des Handarbeitsplatzes ausbaubar ist und durch entsprechende zusätzliche Stationen oder Aufnahmeeinrichtungen im Bereich des Werkstückträgerwechslers eine stufenweise Automatisierung erfolgt. Dabei können auch zusätzliche Prüf- oder Bearbeitungsvorgänge integriert werden.

Die Erfindung wird nachstehend anhand der Figuren näher erläutert. Dabei zeigt:
- Fig. 1: die vollständige teilautomatisierte Fertigungsanlage in perspektivischer Darstellung und
- Fig. 2: die teilautomatisierte Fertigungsanlage in schematischer Darstellung in der Draufsicht.

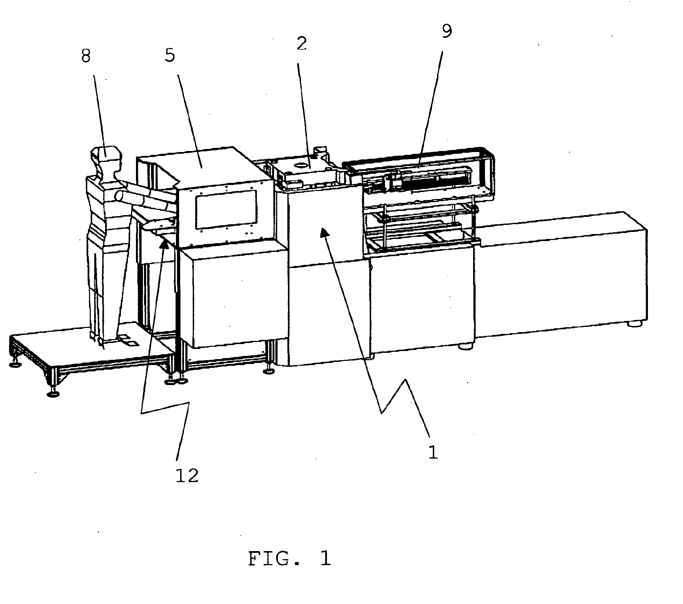

Die Fig. 1 zeigt eine perspektivische Darstellung der teilautomatisierten Vorrichtung zur Herstellung von Formteilen aus Kunststoff. Dabei ist ein Kassettenwechsler 5 zu erkennen, der mit Wechselkassetten bestückt ist, was bei der vorliegenden Zeichnung aufgrund der Abdeckung jedoch nicht deutlich wird. Die Wechselkassetten 4 werden vom Bedienungspersonal 8 manuell entladen bzw. für den nächsten Spritzvorgang vorbereitet. Das Beladen des Kassettenwechslers 5 bzw. der Wechselkassetten 4 erfolgt von einer der Spritzmaschine 1 abgewandten Seite des Kassettenwechslers 5 in einer Position 12 zum manuellen Be- und Entladen durch das Bedienungspersonal 8. Auf diese Weise wird eine Gefährdung des Bedienungspersonals 8 vermieden.

Nachdem die Wechselkassette 4 von der Position 12 in die Entnahme- und Beladeposition 11 für das Transportsystem gebracht wurde, wird sie dort vom Transportsystem 9 dem Kassettenwechsler 5 entnommen und im Spritzgießwerkzeug 2 in die Spritzgießposition 10 gebracht. Dabei verfährt das Transportsystem 9, das im vorliegenden Fall als linearer Greiferarm ausgebildet ist, oberhalb des Gießwerkzeuges 2 lediglich in einer Vor- und Rückwärtsbewegung. Nach Fertigstellung des Formteiles fördert das Transportsystem 9 die Wechselkassette 4 mit aufgespritztem Formteil zurück zum Kassettenwechsler 5 und nimmt bei der anschließenden Rückwärtsbewegung die nächste für den Spritzvorgang vorbereitete Wechselkassette 4 mit zur Spritzgießposition 10. In der Zwischenzeit kann die erste Kassette 4 vom Bedienungspersonal 8 entleert und für den nächsten Spritzvorgang vorbereitet werden bzw. die gesamte Kassette dem Kassettenwechsler entnommen und durch eine weitere, für den Spritzgießvorgang vorbereitete Kassette ersetzt werden.

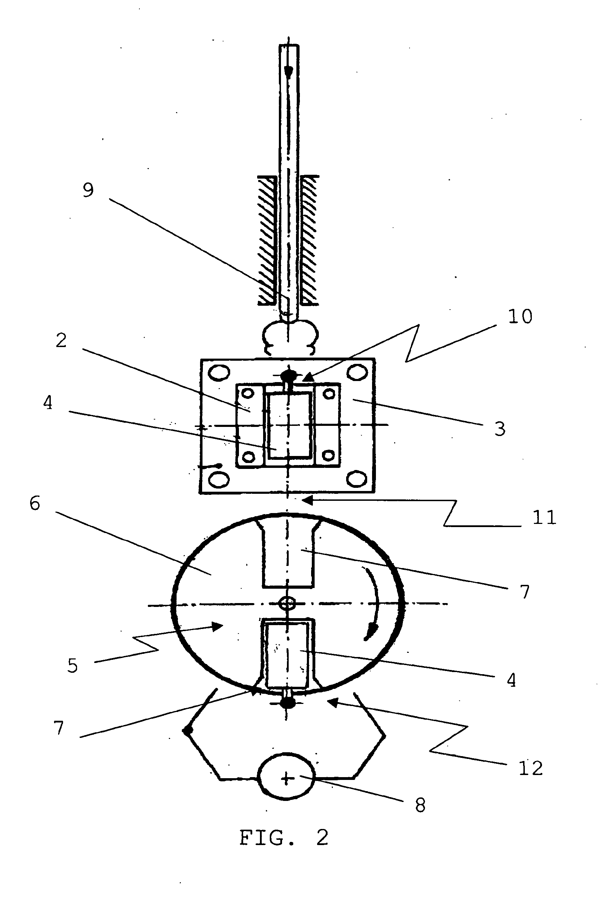

Die Fig. 2 zeigt als schematische Darstellung in der Draufsicht eine Vorrichtung mit einem Rundtisch 6 als Kassettenwechsler 5. Bei dieser Darstellung ist das lineare Prinzip des Verfahrens sowie der Vorrichtung besonders gut zu erkennen. So sind Bedienungspersonal 8, Kassettenwechsler 5, Spritzgießwerkzeug 2 und Transportsystem 9 in einer Linie angeordnet. Der Greiferarm 9 führt lediglich Linearbewegungen auf einer Ebene aus. Bei der vorliegenden Darstellung befindet sich eine erste Wechselkassette 4 in der Spritzgießposition 10, während sich eine zweite Wechselkassette 4 in der manuellen Be- und Entladeposition 12 befindet. Nach Beendigung des Spritzgießvorgangs wird die Wechselkassette 4 mitsamt aufgespritztem Formteil in die leere Aufnahmeeinrichtung 7 des Kassettenwechsler 5 gebracht. Durch eine Drehung um 180° kann jetzt die zweite Wechselkassette 4 von der manuellen Be- und Entnahmeposition 12 in die Entnahme- und Beladeposition 11 für das Transportsystem befördert werden, während die gefüllte Kassette 4 in die manuelle Ent- und Beladeposition 12 gebracht und dort für den nächsten Arbeitsgang vorbereitet wird. Während dieses Vorgangs wird die zweite Wechselkassette 4 dem Kassettenwechsler 5 durch das Transportsystem 9 entnommen und in das Spritzgießwerkzeug 2 transferiert. Die Drehbewegung des Rundtisches 6 ist mit einem Pfeil angedeutet. Die Reichweite des Greiferarmes 9 ist vorzugsweise so ausgelegt, dass das Bedienungspersonal 8 von dem Greiferarm nicht gefährdet werden kann.

Das erfindungsgemäße Verfahren bzw. die erfindungsgemäße Vorrichtung bietet die Möglichkeit beim Spritzgießen von Formteilen auch Kleinserien mit hoher Produktionskonstanz durchzuführen und von personalbedingten Produktions- und Qualitätsschwankungen unabhängig zu machen. Sukzessive Erweiterungen der Anlage ermöglichen einen nahezu linearen Übergang von einer Kleinserie bis zu einer Großserie in einer vollautomatisierten Sonderanlage.

### Bezugszeichenliste

- 1: Spritzgießmaschine
- 2: Spritzgießwerkzeug
- 3: Aufspannplatten (Spritzgießmaschine)
- 4: Wechselkassette
- 5: Kassettenwechsler
- 6: Rundtisch
- 7: Aufnahmeeinrichtung
- 8: Bedienungspersonal
- 9: Transportsystem (Greiferarm)
- 10: Spritzgießposition
- 11: Entnahme- und Beladeposition (Transportsystem)
- 12: Manuelle Entnahme- und Beladeposition

## Patentansprüche

1. Teilautomatisiertes Verfahren zur Herstellung eines Formteils aus Kunststoff mittels eines mit Wechselkassetten (4) bestückbaren Spritzgießwerkzeugs (2), eines Transportsystems (9) und eines Kassettenwechslers (5),
**dadurch gekennzeichnet , dass**
a) die Wechselkassette (4) in einem manuell bestückten Kassettenwechsler (5) in eine Entnahmeposition (11) für das Transportsystem (9) gebracht wird,
b) die Wechselkassette (4) mittels des Transportsystems (9) dem Kassettenwechsler (5) entnommen und im Spritzgießwerkzeug (2) in eine Spritzgießposition (10) gebracht wird, in der das Formteil gegossen wird,
c) die Wechselkassette (4) mit aufgespritztem Formteil mittels des Transportsystems (9) dem Spritzgießwerkzeug (2) entnommen und dem Kassettenwechsler (5) wieder zugeführt wird, und
d) anschließend die Wechselkassette (4) in eine Ent- und Beladeposition (12) für das Bedienungspersonal (8) gebracht wird,
wobei das Be- und Entladen des Kassettenwechslers (5) bzw. des Spritzgießwerkzeugs (2) durch das Transportsystem (9) in einer Linearbewegung erfolgt.

2. Verfahren nach Anspruch 1,
**dadurch gekennzeichnet, dass** als Spritzgießmaschine eine Vertikalspritzgießmaschine (1) vorgesehen ist.

3. Verfahren nach Anspruch 1 oder 2,
**dadurch gekennzeichnet, dass** das Transportsystem (9) ein senkrecht zur Längsachse des Spritzgießwerkzeugs (2) angeordneter, linear beweglicher Greiferarm ist.

4. Verfahren nach einem der Ansprüche 1 bis 3,
**dadurch gekennzeichnet, dass** der Kassettenwechsler (5) ein drehbarer Rundtisch (6) mit mindestens einer Aufnahmeeinrichtung (7) für eine Wechselkassette (4) ist.

5. Verfahren nach Anspruch 4,
**dadurch gekennzeichnet, dass** der drehbare Rundtisch (6) zwei um 180° gegeneinander verschobene und einander gegenüberliegende Aufnahmeeinrichtungen (7) für Wechselkassetten (4) aufweist.

6. Verfahren nach einem der Ansprüche 1 bis 3,
**dadurch gekennzeichnet , dass** der Kassettenwechsler (5) ein Kassettenumlaufsystem ist.

7. Vorrichtung zur Herstellung eines Formteils aus Kunststoff mit einem mit Wechselkassetten (4) bestückbaren Spritzgießwerkzeug (2), einem Transportsystem (9) für Wechselkassetten (4) und einem Kassettenwechsler (5),
**dadurch gekennzeichnet, dass** der Kassettenwechsler (5) mindestens eine erste Position (12) zum manuellen Ent- und Beladen von oder mit Wechselkassetten (4) sowie.eine zweite Position (11) zum automatischen Ent- und Beladen durch das Transportsystem (9) aufweist, wobei das Transportsystem (9) ein linear bewegliches Transportsystem (9) ist.

8. Vorrichtung nach Anspruch 7,
**dadurch gekennzeichnet, dass** als Spritzgießmaschine eine Vertikalspritzgießmaschine (1) vorgesehen ist.

9. Vorrichtung nach Anspruch 7 oder 8,
**dadurch gekennzeichnet, dass** das Transportsystem (9) ein senkrecht zu Längsachse des Spritzgießwerkzeugs (2) angeordneter, linear beweglicher Greiferarm ist.

10. Vorrichtung nach einem der Ansprüche 7 bis 9,
**dadurch gekennzeichnet, dass** der Kassettenwechsler (5) ein drehbarer Rundtisch (6) mit mindestens einer Aufnahmeeinrichtung (7) für eine Wechselkassette (4) ist.

11. Vorrichtung nach Anspruch 10,
**dadurch gekennzeichnet, dass** der drehbare Rundtisch (6) zwei um 180° gegeneinander verschobene und einander gegenüberliegende Aufnahmeeinrichtungen (7) für Wechselkassetten (4) aufweist.

12. Vorrichtung nach einem der Ansprüche 7 bis 9,
**dadurch gekennzeichnet, dass** der Kassettenwechsler (5) ein Kassettenumlaufsystem ist.

## Claims

1. A partially automated method of producing a moulded part from plastics material by means of an injection-moulding tool (2) capable of being equipped with interchangeable cassettes (4), a conveying system (9) and a cassette changer (5), **characterized in that**
a) the interchangeable cassette (4) is moved into a removal position (11) for the conveying system (9) in a manually equipped cassette changer (5),
b) the interchangeable cassette (4) is removed from the cassette changer (5) by means of the conveying system (9) and is moved into an injection-moulding position (10) - in which the moulded part is cast - in the injection-moulding tool (2),
c) the interchangeable cassette (4) with the moulded part injection-moulded thereon is removed from the injection-moulding tool (2) and is supplied to the cassette changer (5) again by means of the conveying system (9), and
d) the interchangeable cassette (4) is then moved into a discharging and charging position (12) for the operating staff (8),
wherein the charging and discharging of the cassette changer (5) or the injection-moulding tool (2) is carried out in a linear movement by the conveying system (9).

2. A method according to claim 1, **characterized in that** a vertical injection-moulding machine (1) is provided as the injection-moulding machine.

3. A method according to claim 1 or 2, **characterized in that** the conveying system (9) is a gripper arm arranged at a right angle to the longitudinal axis of the injection-moulding tool (2) and movable in a linear manner.

4. A method according to any one of claims 1 to 3, **characterized in that** the cassette changer (5) is a rotatable circular table (6) with at least one receiving device (7) for an interchangeable cassette (4).

5. A method according to claim 4, **characterized in that** the rotatable circular table (6) has two receiving devices (7) displaced by 180° with respect to each other and situated opposite each other for interchangeable cassettes (4).

6. A method according to any one of claims 1 to 3, **characterized in that** the cassette changer (5) is a cassette circulation system.

7. An apparatus for producing a moulded part from plastics material with an injection-moulding tool (2) capable of being equipped with interchangeable cassettes (4), a conveying system (9) for interchangeable cassettes (4) and a cassette changer (5), **characterized in that** the cassette changer (5) has at least one first position (12) for the manual discharging and charging of or with interchangeable cassettes (4) and a second position (11) for the automatic discharging and charging by the conveying system (9), wherein the conveying system (9) is a conveying system (9) movable in a linear manner.

8. An apparatus according to claim 7, **characterized in that** a vertical injection-moulding machine (1) is provided as the injection-moulding machine.

9. An apparatus according to claim 7 or 8, **characterized in that** the conveying system (9) is a gripper arm arranged at a right angle to the longitudinal axis of the injection-moulding tool (2) and movable in a linear manner.

10. An apparatus according to any one of claims 7 to 9, **characterized in that** the cassette changer (5) is a rotatable circular table (6) with at least one receiving device (7) for an interchangeable cassette (4).

11. An apparatus according to claim 10, **characterized in that** the rotatable circular table (6) has two receiving devices (7) displaced by 180° with respect to each other and situated opposite each other for interchangeable cassettes (4).

12. An apparatus according to any one of claims 7 to 9, **characterized in that** the cassette changer (5) is a cassette circulation system.

## Revendications

1. Procédé partiellement automatisé pour la fabrication de pièces de forme en matière plastique au moyen d'un outil d'injection (2) équipé de caissons échangeables (4), d'un système de transport (9) et d'un échangeur de caisson (5),
procédé **caractérisé en ce que**
a) le caisson échangeable (4) est amené dans un échangeur de caisson (5) à chargement manuel dans une position d'extraction (11) pour le système de transport (9),
b) le caisson échangeable (4) est extrait de l'échangeur de caisson (5) par le système de transport (9) et est amené dans l'outil d'injection (2) dans une position d'injection (10) dans laquelle la pièce de forme est moulée,
c) le caisson échangeable (4) avec la pièce de forme est extrait de l'outil d'injection (2) par le système de transport (9) et ramené à l'échangeur de caisson (5), et
d) le caisson échangeable (4) est ensuite amené dans une position d'enlèvement et de chargement (12) par l'opérateur (8) dans laquelle le chargement et l'enlèvement (2) de l'échangeur de caisson (5), respectivement de l'outil d'injection (2) est fait par un mouvement linéaire du système de transport (9).

2. Procédé selon la revendication 1,
**caractérisé en ce que**
la machine d'injection est une machine d'injection verticale (1).

3. Procédé selon la revendication 1 ou 2,
**caractérisé en ce que**
le système de transport (9) est un bras de préhension se déplaçant linéairement perpendiculairement à l'axe longitudinal de l'outil d'injection (2).

4. Procédé selon l'une des revendications 1 à 3,
**caractérisé en ce que**
l'échangeur de caisson (5) est une table circulaire (6) rotative avec au moins une installation de réception (7) pour un caisson échangeable (4).

5. Procédé selon la revendication 4,
**caractérisé en ce que**
la table circulaire (6) rotative présente deux installations de réception (7) pour le caisson échangeable (4) en regard l'une de l'autre et opposées à 180°.

6. Procédé selon l'une des revendications 1 à 3,
**caractérisé en ce que**
l'échangeur de caisson (5) est un système de circulation de caisson.

7. Dispositif de fabrication d'une pièce de forme en matière plastique comprenant :
- un outil d'injection (2) équipé de caissons échangeables (4), un système de transport (9) pour les caissons échangeables (4), et un échangeur de caisson (5),
dispositif **caractérisé en ce que**
l'échangeur de caisson (5) présente au moins une première position (12) pour l'enlèvement et le chargement manuel des caissons échangeables (4) ainsi qu'une seconde position (11) pour l'enlèvement et le chargement automatique par le système de transport (9), le système de transport (9) étant un système de transport (9) se déplaçant linéairement.

8. Dispositif selon la revendication 7,
**caractérisé en ce que**
la machine d'injection est une machine d'injection verticale (1).

9. Dispositif selon la revendication 7 ou 8,
**caractérisé en ce que**
le système de transport (9) est un bras de préhension se déplaçant linéairement perpendiculairement à l'axe longitudinal de l'outil d'injection (2).

10. Dispositif selon l'une des revendications 7 à 9,
**caractérisé en ce que**
l'échangeur de caisson (5) est une table circulaire (6) rotative avec au moins une installation de réception (7) pour un caisson échangeable (4).

11. Dispositif selon la revendication 10,
**caractérisé en ce que**
la table circulaire (6) rotative présente deux installations de réception (7) pour le caisson échangeable (4) en regard l'une de l'autre et opposées à 180°.

12. Dispositif selon l'une des revendications 7 à 9,
**caractérisé en ce que**
l'échangeur de caisson (5) est un système de circulation de caisson.
